# EUROPEAN PATENT APPLICATION

(11) **EP 1 482 209 A1**
(43) Date of publication of application: **01.12.2004**
(21) Application number: 03425348.4
(22) Date of filing: 30.05.2003
(51) Int. Cl.: F16H 7/18, F16H 7/08

(54) **A tensioning and guide means for chains**

(71) Applicant: Morse Tec Europe S.r.l., 20043 Arcore, Milano (IT)
(72) Inventor: Clayton Philippe Alain, Rickmansworth, Herts WD3 7HL (GB)
(74) Representative: Coggi, Giorgio

(57) **Abstract**

A resisting structure (11) is disclosed which can be used to realise a tensioning arm (5) or a guide (4) belonging to a device for tensioning a chain (1), said resisting structure (11) being able to resist the mechanical stresses to which the tensioning arm (5) and the guide (4) are subjected and carrying a shoe (12) of material with a low friction coefficient on which the chain (1) slides.

The resisting structure (11) is U-shaped in section and comprises at least one pair of elongate outer branches (13) and means (20), situated on the inside of branches (13), able to carry the shoe (12) and to keep it at a preset distance from the bottom of the U-shaped resisting structure (11).

The spacer means (20) preferably comprise at least one elongate branch (14), positioned on the inside of the outer branches (13) of the resisting structure (11), to which it is parallel, which carries the shoe (12) and which is shorter in length than the outer branches (13).

If the space means (20) comprise a pair of branches (14), the distance (D) between said branches (14) is practically equal to the width of the chain (1).

## Description

The present invention refers to a resisting structure that can be used for tensioning means (a tensioning arm) and/or guide means (a guide) belonging to devices for tensioning drive transmission means, such as chains.

Reference will be made in particular to a tensioning arm and/or a guide belonging to a device for tensioning chain transmission means for motor vehicles.

A timing system of an internal combustion engine can be controlled by means of a chain transmission wherein the chain is wound on one or more sprocket, one of which is a driving sprocket and takes its drive from the driving shaft to transmit it to the camshaft.

Since for reasons of adjustment, wear of materials and/or take-up of play it is often necessary to compensate for a certain slack on the chain, use is known of tensioning devices wherein a tensioning arm is biased with an adjustable force against a branch of the chain.

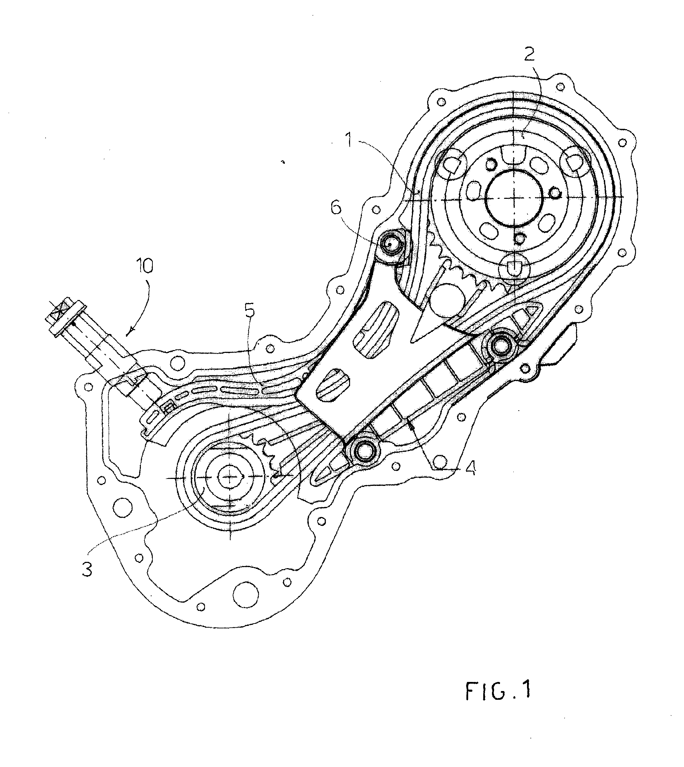

Figure 1 shows diagrammatically a chain transmission, per se known, comprising a tensioning device and a guide; in Figure 1 there can be seen the driving sprocket 2 and the driven sprocket 3 on which is wound a chain 1, whose taught branch (the bottom one in the figure) is guided by the guide 4 and whose slack branch (the top one in the figure) is tensioned by means of the tensioning arm 5, oscillating around a pivot 6, which is biased against the corresponding branch of the chain 1 by a tensioning device 10.

Various means for biasing the tensioning device 5 against the chain 1 are known to the art: the most frequently used means are tensioners 10, which comprise a fixed member mounted on the engine block and a movable member, slidable with respect to the fixed member, which acts against the tensioning arm 5.

The mobile member is biased towards the tensioning arm 5 by the action of biasing means comprising at least one spring; any slackening of the chain 1 due to heating, to wear and to time is compensated for by the movement of the movable member under the action of the biasing means.

Furthermore, in an internal combustion engine, the bending stress to which the timing chain 1 is subjected is not uniform but has a peak at each ignition step whereas it has a minimum between two consecutive ignition steps.

Because of the inevitable inertia of the tensioning arm-tensioner system, the peaks in tension of the chain 1, which are repeated with a very high frequency, are transferred (at least in part) to the tensioning arm 5 and to the guide 4 which, therefore, are (or can be) subjected to high, or in any case not negligible, mechanical bending stresses.

Indicatively, the tension peaks of the chain 1 are repeated four times at each revolution of the driving shaft, that is at least 10-12,000 times per minute.

The tensioning arm 5 and the guide 4 have a slender form and normally comprise a structure able to resist the mechanical stresses to which they are subjected and a layer of material with a low friction coefficient, hereinunder called "shoe", on which the chain 1 slides.

The resisting structure of the tensioning arm 5 and/or of the guide 4 is made of the most economical material compatible with the loads measured and with the space available.

The shoe preferably consists of a layer of plastic material fixed to the resisting structure in a per se known manner.

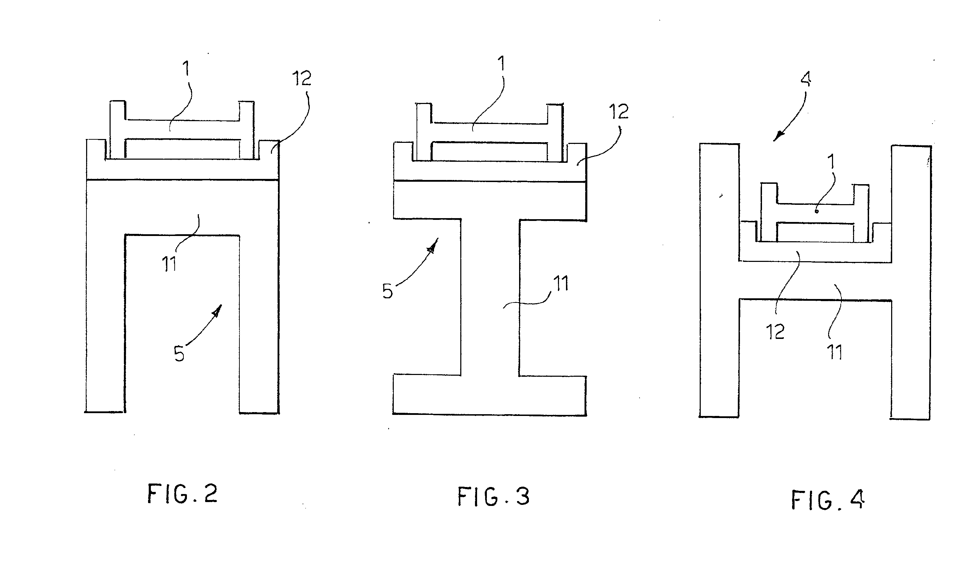

In the tensioning arms 5 and guides 4 most widely used at present, the resisting structure (diagrammatically illustrated in Figure 2) has a U-shaped section whose branches are situated on the side of the resisting structure opposite to that to which the shoe on which the chain 1 slides is fixed: the length of the branches of the resisting structure, important for the purposes of a good bending resistance of said structure, is nevertheless normally limited by the presence of the mechanical members belonging to the engine, situated in the immediate vicinity of the tensioning arm 5 and/or of the guide 4 on the opposite side to that of contact with the chain 1.

The resisting structure diagrammatically illustrated in Figure 2 can be produced by means of a relatively simple mould with a relatively high production rate but does not have a high bending resistance, with consequent possible breaking of the tensioning arm.

To overcome said drawback, resisting structures have been proposed (diagrammatically illustrated in Figures 3 and 4) which are 1-shaped or H-shaped in section, for example, but said sections require the use of more complex moulds (with a consequent reduction in production rates) without bringing an adequate increase in the bending resistance of the tensioning arm.

Furthermore, for said resisting structures also, the length of the arms is normally limited by the presence of other mechanical members, belonging to the motor, situated in the immediate vicinity of the tensioning arm 5 and/or of the guide 4 on the side opposite to that in contact with the chain 1.

The object of the invention is to provide a resisting structure that is simple, cheap to produce and has a high bending resistance, higher than that of the resisting structures of the prior art.

This object is achieved by a resisting structure having the characteristics illustrated in independent claim 1.

Preferred embodiments of the invention are apparent from the dependent claims.

Essentially, according to the invention, the resisting structure is U-shaped in section and comprises at least one pair of elongate outer branches and means, positioned on the inside of the outer branches, suitable to carry the shoe and to keep it at a preset distance from the bottom of the U-shaped resisting structure.

The spacer means preferably comprise, in section, at least one elongate branch, situated on the inside of the outer branches to which it is parallel, which carries the shoe and which is shorter in length than the outer branches; if the spacer means comprise at least one pair of inner branches which carry the shoe, the distance between said branches corresponds to the width of the chain.

Further characteristics of the invention will be made clearer by the detailed description that follows, referring to purely exemplary and therefore non limiting embodiments thereof, illustrated in the appended drawings where:
- Figure 1 shows diagrammatically a chain drive, per se known, provided with a tensioning device and a guide;
- Figures 2 to 4 show diagrammatically, in section, some resisting structures of the prior art;
- Figure 5 shows very diagrammatically, in section, a resisting structure made according to the invention;
- Figure 6 shows diagrammatically, in section, a resisting structure according to the invention, comprising a first embodiment of the spacer means of Figure 5;
- Figure 7 shows a side view of a tensioning arm comprising the resisting structure of Figure 5;
- Figure 8 shows a front view of the resisting structure of Figure 7;
- Figure 9 shows the resisting structure of Figure 7 sectioned along the plane IX-IX of Figure 8;
- Figures 10 and 11 show diagrammatically the top views of resisting structures according to the invention, comprising two further embodiments of the spacer means of Figure 5.

In the appended figures, corresponding parts are designated by the same reference numerals.

Figure 1 shows diagrammatically the chain drive of the prior art, comprising a tensioning device and a guide, already discussed previously.

Figures 2 to 4 show diagrammatically some prior art embodiments of a resisting structure 11 suitable to resist to the mechanical stresses to which the tensioning arm and/or the guide 4 are subjected and a shoe 12 of material with a low friction coefficient on which the chain 1 slides.

The shoe 12 is fixed in per se know manner to the resisting structure 11.

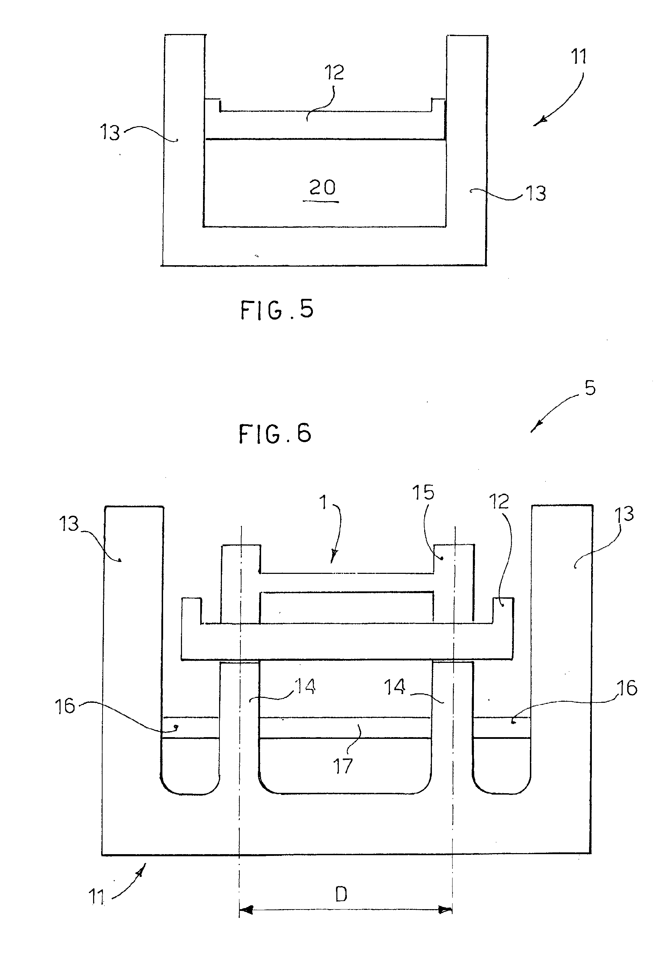

Figure 5 shows very diagrammatically, in section, a resisting structure 11 - made according to the invention and usable to made a tensioning arm 5 and/or a guide 4 - which is U-shaped and comprises a pair of elongate outer branches 13 and spacer means 20, situated on the inside of said outer branches 13, suitable to carry the shoe 12 and to keep it at a preset distance from the bottom of the U-shaped resisting structure 11.

Some embodiments of the spacer means 20 will be described with reference to Figures 5-11.

Figure 6 shows diagrammatically, in section, a resisting structure 11 according to the invention comprising a first embodiment of the spacer means 20 of Figure 5 which comprise, in section, a pair of elongate branches 14 - parallel to each other and to the outer branches 13 - which carry the shoe 12; without departing from the scope of the invention, the spacer means 20 can comprise only one elongate branch 14, parallel to the outer branches 13, which carries the shoe 12.

The distance D between the branches 14 corresponds - more or less - to the width of the chain 1, whose side members 15 rest on the shoe 12 level the branches 14 of the resisting structure 11.

The width of the branches 14 is preferably equal to that of the side members 15 of the chain 1 and in any case it is comprised between 1 and 3 times said width.

The resisting structure 11 of Figure 6 does not have undercuts and therefore can be made by means of a relatively simple and inexpensive mould, which allows a good production rate to be achieved since at the same time it allows the production of a number of pieces larger than that which can be obtained according to the prior art.

The branches 14 are advantageously smaller in height than the outer branches 13.

The branches (14, 13) belonging to the resisting structure 11 are situated on the side of the resisting structure 11 to which is fixed the shoe 12 on which the chain 1 slides: the length of the outer branches 13 is therefore free from the limitations (presented by the resisting structures of the prior art) deriving from the presence of other mechanical members, belonging to the engine, situated in the immediate vicinity of the tensioning arm 5 and/or of the guide 4.

The outer branches 13 can therefore be better sized to resist the bending stress to which the tensioning arm 5 and/or guide 4 are -subjected (or are expected to be subjected), increasing the reliability thereof.

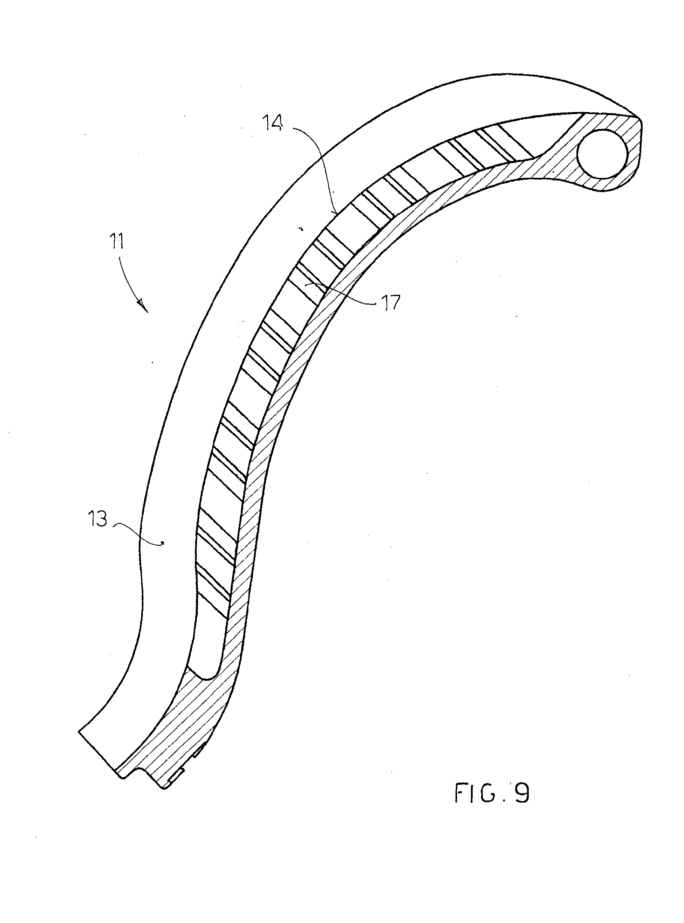

Finally, to increase the mechanical resistance of the resisting structure 11, the branches 14 can be connected to each other by a plurality of cross members designated by 17 in Figure 8 and/or each of the branches 14 can be connected to the outer adjacent branch 13 by a plurality of cross members designated by 16 in Figure 8.

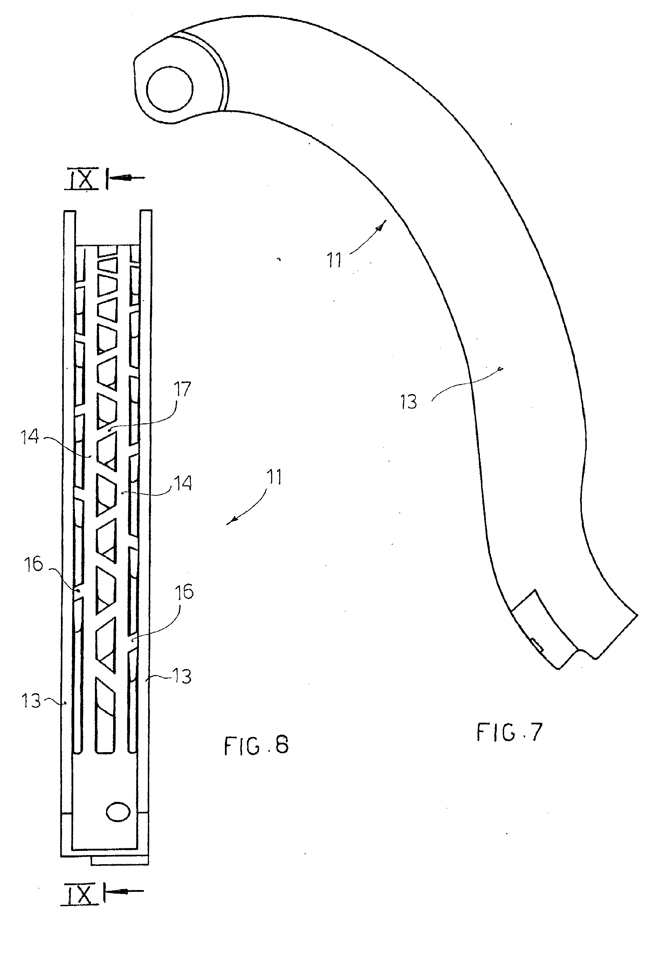

Figure 7 shows a side view of a tensioning arm comprising the resisting structure 11 of Figure 5; in Figure 7 one of the outer branches 13 can be seen.

Figure 8 shows a front view of the resisting structure 11 of Figure 7; in Figure 8 the outer branches 13 and the branches 14 - which are connected to each other by a plurality of cross members 17 and to the adjacent outer branches 13 by a plurality of cross members 16 - can be seen.

Figure 9 shows the resisting structure 11 of Figure 8, sectioned along the plane IX-IX of Figure 8; in Figure 9 there can be seen one of the branches 14, one of the outer branches 13 and a plurality of cross members 17, only one of which has been designated with the corresponding reference numeral for the sake of simplicity of the graphic representation.

In the embodiment illustrated in Figures 8 and 9, the cross members 16 and 17 are inclined with respect to the branches 13 and 14 but, without departing from the scope of the invention, the cross members 16 and 17 can be perpendicular to the branches 13 and 14.

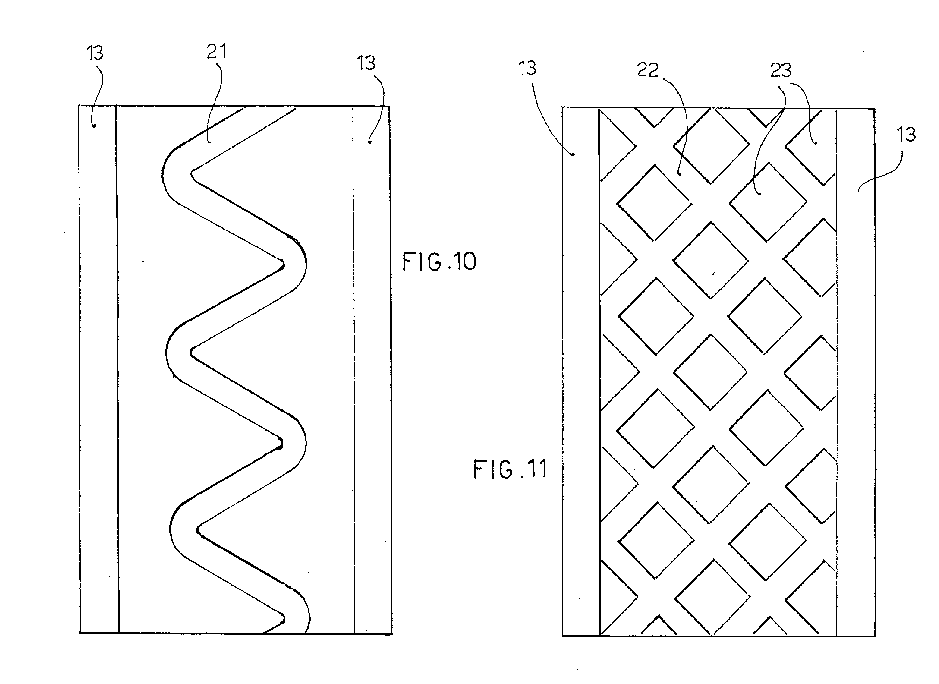

Figures 10 and 11 show diagrammatically the top views of resisting structures 11 according to the invention comprising two further embodiments of the spacer means 20, which consist of at least one undulated support 21 (Figure 10) on which rests the shoe 12 (omitted for the sake of simplicity of the graphic representation) or by a honeycomb structure 22 (Figure 11) on which rests the shoe 12, omitted for the sake of simplicity of the graphic representation.

According to a further embodiment of the spacer means 20, dual to that illustrated in Figure 11, the spacer means 20 consist of a plurality of protrusions 23 on which rests the shoe 12, omitted for the sake of simplicity of the graphic representation.

Again without departing from the scope of the invention, a person skilled in the art can make all the modifications and improvements to the resisting structure according to the present invention suggested by his experience and by the natural evolution of the art.

## Claims

1. A resisting structure (11) for tensioning (5) and guiding (4) means belonging to a tensioning device for chains, **characterised in that** it is U-shaped in section and **in that** it comprises at least one pair of outer elongate branches (13) and means (20), positioned inside said outer branches (13), able to carry a shoe (12) of material with a low friction coefficient on which the chain (1) slides, the shoe (12) being fixed to the resisting structure (11).

2. A resisting structure (11) as claimed in claim 1, **characterised in that** the spacer means (20) comprise, in section, at least one elongate branch (14), positioned on the inside of the outer branches (13) to which it is parallel, which carries the shoe (12).

3. A resisting structure (11) as claimed in claim 2, **characterised in that** the branches (13, 14) of the resisting structure (11) are positioned on the side of the resisting structure (11) to which the shoe (12) on which the chain (1) slides is fixed.

4. A resisting structure (11) as claimed in claim 2, **characterised in that** the spacer means (20) comprise, in section, a pair of elongate branches (14), positioned on the inside of the outer branches (13), which carry the shoe (12) and **in that** the distance (D) between said branches (14) corresponds to the width of the chain (1).

5. A resisting structure (11) as claimed in claim 2 or 4, **characterised in that** the at least one branch (14) is shorter in length than the outer branches (13).

6. A resisting structure (11) as claimed in claim 2 or 4, **characterised in that** the side members (15) of the chain (1) rest on the shoe (12) level the at least one branch (14) of the resisting structure (11).

7. A resisting structure (11) as claimed in claim 2 or 4, **characterised in that** the width of the at least one branch (14) is between 1 and 3 times the width of the side members (15) of the chain (1).

8. A resisting structure (11) as claimed in claim 7, **characterised in that** the width of the at least one branch (14) is about equal to the width of the side members (15) of the chain (1).

9. A resisting structure (11) as claimed in claim 4, **characterised in that** the branches (14) are connected to each other by cross members (17).

10. A resisting structure (11) as claimed in claim 4, **characterised in that** each of the branches (14) is connected to the adjacent outer branch (13) by cross members (16).

11. A resisting structure (11) as claimed in claim 1, **characterised in that** the spacer means (20) comprise at least one undulated support (21) on which the shoe (12) rests.

12. A resisting structure (11) as claimed in claim 1, **characterised in that** the spacer means (20) comprise a honeycomb structure (22) on which the shoe (12) rests.

13. A resisting structure (11) as claimed in claim 1, **characterised in that** the spacer means (20) comprise a plurality of protrusions (23) on which the shoe (12) rests.
